# EUROPEAN PATENT SPECIFICATION

(11) **EP 3 174 244 B1**
(45) Date of publication and mention of the grant of the patent: **26.04.2023**
(21) Application number: 16188280.8
(22) Date of filing: 12.09.2016
(51) Int. Cl.: H04L 12/18

(54) **VIDEO COMMUNICATION ENDING METHOD AND APPARATUS, COMPUTER PROGRAM AND RECORDING MEDIUM**
VIDEOKOMMUNIKATIONSBEENDIGUNGSVERFAHREN UND -VORRICHTUNG, COMPUTERPROGRAMM UND AUFZEICHNUNGSMEDIUM
PROCÉDÉ ET APPAREIL DE FINALISATION DE COMMUNICATION VIDÉO, PROGRAMME INFORMATIQUE ET SUPPORT D'ENREGISTREMENT

(30) Priority: 30.11.2015 CN 201510853922
(43) Date of publication of application: 31.05.2017
(73) Proprietor: Xiaomi Inc., Beijing 100085 (CN)
(72) Inventor: ZHAO, Xiong, Beijing, 100085 (CN); SUN, Heng, Beijing, 100085 (CN); LIANG, Shangui, Beijing, 100085 (CN)
(74) Representative: Cabinet Beau de Loménie

(56) References cited:
- US-A1- 2007 211 140
- US-A1- 2011 181 683
- US-A1- 2011 249 081

## Description

### TECHNICAL FIELD

The present invention relates to the field of communication technology, and more particularly, to a video communication ending method and apparatus, a computer program and a recording medium.

### BACKGROUND

With the continuous development of communication technology, video communication between users via a network has become a popular way of communication. By virtue of video communications, a user may not only see his/her communication counterpart's head portrait, but also perform voice communication with the counterpart.

When a user wants to end video communication with another user, the only way is to directly click the close button on the video communication interface. Then, it shows on the other user's video communication interface that the counterpart has hung up. Subsequently, the video communication between the users is disconnected and ended.

Documents US 2011/181683 and US 2007/211140 disclose known methods for ending video communications.

The way of ending video communication lacks flexibility, since there is only one way to end the video communication.

### SUMMARY

Embodiments of the present invention provide a video communication ending method and apparatus, a computer program and a recording medium for improving the flexibility of ending the video communication according to respective independent claims 1, 4 and 7 and 8.

According to one aspect of embodiments of this invention, a video communication ending method and a communication ending apparatus are provided in accordance with the claims.

In one particular embodiment, the steps of the video communication ending method are determined by computer program instructions.

Consequently, according to yet another aspect of embodiments of this invention, the invention is also directed to a computer program for executing the steps of a video communication ending method as described above when this program is executed by a computer.

This program can use any programming language and take the form of source code, object code or a code intermediate between source code and object code, such as a partially compiled form, or any other desirable form.

According to a particular embodiment, the detection module is configured to detect whether a second ending button is clicked by the user; the sending module is further configured to send user-request-disconnection information to the counterpart device if the user clicks the second ending button, so that confirm-user-disconnection information is generated by the counterpart device according to a confirmation of the user-request-disconnection information by a user of the counterpart device; and the video communication ending apparatus further includes: a receiving module configured to receive the confirm-user-disconnection information sent by the counterpart device.

According to a particular embodiment, the sending module is configured to send the disconnection request to the counterpart device according to the confirm-user-disconnection information in order to disconnect the video communication with the counterpart device.

The receiving module is further configured to receive a connection setup request sent by the counterpart device and discard the connection setup request. The sending module is further configured to send the network failure prompt information to the counterpart device.

According to a particular embodiment, the receiving module is configured to receive a plurality of connection setup requests sent by the counterpart device in a preset period of time and discard each of the plurality of connection setup requests. The sending module is configured to send the network failure prompt information to the counterpart device while the receiving module discards the connection setup request.

In one particular embodiment, the steps of the video communication ending method are determined by computer program instructions.

Consequently, according to yet another aspect of embodiments of this invention, the invention is also directed to a computer program for executing the steps of a video communication ending method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

In the video communication ending method and apparatus provided in the embodiments of this invention, a new ending button is added, and network failure prompt information is sent to the counterpart device after a user clicks the new ending button, so that the user of the counterpart device considers that a network failure causes the interruption of video communication. As compared with the conventional way of ending video communication in which a close button on the video communication interface of one user is directly clicked and it is shown on the video communication interface of the other user that the counterpart has hung up, the flexibility of ending video communication is increased.

### BRIEF DESCRIPTION OF THE DRAWINGS

Fig. 1 is a flowchart of a method for ending video communication according to an exemplary embodiment of this invention;
Fig. 2 is a structure view of a video communication ending apparatus according to an exemplary embodiment of this invention; and
Fig. 3 is a structure view of a video communication ending apparatus according to another exemplary embodiment of this invention.

### DETAILED DESCRIPTION

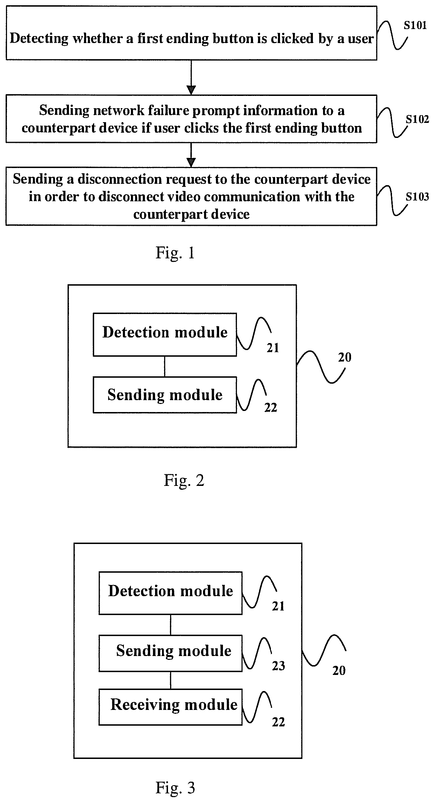

Fig. 1 is a flowchart of a method for ending video communication according to an exemplary embodiment of this invention. The method comprises the following steps.

In step 101, it is detected whether a first ending button is clicked by a user.

The video communication ending method provided by the embodiment of present invention is executed by a video communication ending apparatus which is arranged in a device such as a personal computer, a mobile terminal, a portable computer, etc. Taking the mobile terminal as an example, two users (for example, user A and user B) use their own mobile terminals to perform video communication. When user A and user B are performing video communication with each other, video communication interfaces are respectively shown on screens of the mobile terminals. There are two ending buttons on each of the video communication interfaces. One is the close button of the prior art, and the other is the first ending button of the embodiment of this invention. When user A clicks the close button on the screen of his/her mobile terminal, the video communication with the mobile terminal of user B is disconnected. Such process is consistent with that of prior art.

In the embodiment of this invention, user A acts as the party who actively ends the video communication. The video communication ending apparatus in the mobile terminal of user A detects whether the first ending button is clicked by user A in real time.

In step 102, network failure prompt information is sent to a counterpart device if the user clicks the first ending button.

If the video communication ending apparatus in the mobile terminal of user A detects that the first ending button is clicked by user A, network failure prompt information is sent to the mobile terminal of user B. The network failure prompt information specifically prompts network interruption, failure of user A's network, failure of user B's network or the like. Therefore, user B thinks a network failure causes interruption of video communication with user A.

In step 103, a disconnection request is sent to the counterpart device in order to disconnect the video communication with the counterpart device.

After the video communication ending apparatus in the mobile terminal of user A sends network failure prompt information to the mobile terminal of user B, the video communication ending apparatus subsequently sends a disconnection request to the mobile terminal of user B, so that the video communication connection between user A and user B can be disconnected. Signaling interaction between the two mobile terminals involved in the disconnection process of video communication is consistent with that of prior art.

In the embodiment of the invention, a new ending button is added, and network failure prompt information is sent to the counterpart device after a user clicks the new ending button, so that the user of the counterpart device considers that a network failure causes the interruption of video communication. As compared with the conventional way of ending video communication in which a close button on the video communication interface of one user is directly clicked and it is shown on the video communication interface of the other user that the counterpart has hung up, the flexibility of ending video communication is increased.

On the basis the above embodiment, the video communication ending method further comprises: detecting whether a second ending button is clicked by the user; sending user-request-disconnection information to the counterpart device if the user clicks the second ending button, so that confirm-user-disconnection information is generated by the counterpart device according to a confirmation of the user-request-disconnection information by a user of the counterpart device; and receiving the confirm-user-disconnection information sent by the counterpart device.

In the embodiment of this invention, there are three ending buttons in the video communication interface. One is the close button in the prior art, the second one is the first ending button of the above embodiment, and the third one is the second ending button of this embodiment of the invention. In the embodiment of the invention, user A acts as the party who actively ends the video communication. The video communication ending apparatus in the mobile terminal of user A detects whether the second ending button is clicked by user A in real time. If the video communication ending apparatus in the mobile terminal of user A detects that the second ending button is clicked by user A, disconnection request information, such as user_A-request-disconnection information, is sent to the mobile terminal of user B. User B confirms by clicking according to the user_A-request-disconnection information. The mobile terminal of user B generates confirm-user-disconnection information according to the click-to-confirm operation, and sends the confirm-user-disconnection information to the mobile terminal of user A.

The sending the disconnection request to the counterpart device in order to disconnect the video communication with the counterpart device comprises: sending the disconnection request to the counterpart device according to the confirm-user-disconnection information in order to disconnect the video communication with the counterpart device.

The mobile terminal of user A sends a disconnection request to the mobile terminal of user B after receiving the confirm-user-disconnection information, in order to disconnect the video communication with the mobile terminal of user B.

After sending the disconnection request to the counterpart device in order to disconnect the video communication with the counterpart device, the methods further comprises: receiving a connection setup request sent by the counterpart device; and discarding the connection setup request and sending the network failure prompt information to the counterpart device.

During a period of time after the video communication between the mobile terminal of user A and the mobile terminal of user B is disconnected, if the mobile terminal of user B initiates a connection setup request to the mobile terminal of user A in order to setup video communication again with the mobile terminal of user A, the video communication ending apparatus in the mobile terminal of user A discards the connection setup request after receiving it, and sends the network failure prompt information in the above embodiment to the mobile terminal of user B, so that user B considers that a network failure makes the video communication with user B unable to be set up again.

The step of receiving the connection setup request sent by the counterpart device comprises: receiving a plurality of connection setup requests sent by the counterpart device in a preset period of time. The step of discarding the connection setup request and sending the network failure prompt information to the counterpart device comprises: discarding each of the plurality of connection setup requests and meanwhile sending the network failure prompt information to the counterpart device.

During a period of time after the video communication between the mobile terminals of user A and user B is disconnected, the mobile terminal of user B may initiate a plurality of connection setup requests to the mobile terminal of user A. For each of the connection setup requests, the video communication ending apparatus in the mobile terminal of user A discards the connection setup request, and sends the network failure prompt information of the above embodiment to the mobile terminal of user B, so that user B considers that a network failure makes the video communication with user A unable to be set up again.

In the embodiment of the invention, an additional new ending button is added, and user-request-disconnection information is sent to the counterpart device after a user clicks the additional new ending button, in order to request the counterpart device's approval to interrupt video communication, thereby improving the flexibility of ending video communication. Moreover, the flexibility of ending video communication is further increased by discarding the connection setup request sent by the counterpart device and sending the network failure prompt information to the counterpart device, so that the user of the counterpart device considers that a network failure makes the video communication with user A unable to be set up again.

Fig. 2 is a structure view of a video communication ending apparatus according to an embodiment of this invention. The video communication ending apparatus provided in the embodiment of this invention may execute the process flow provided by the embodiment of video communication ending method. As shown in fig. 2, the video communication ending apparatus 20 includes a detection module 21 and a sending module 22. The detection module 21 is configured to detect whether a first ending button is clicked by a user. The sending module 22 is configured to send network failure prompt information to a counterpart device when the user clicks the first ending button and to send a disconnection request to the counterpart device in order to disconnect the video communication with the counterpart device.

In the embodiment of the invention, a new ending button is added, and network failure prompt information is sent to the counterpart device after a user clicks the new ending button, so that the user of counterpart device considers that a network failure causes the interruption of video communication. As compared with the conventional way of ending video communication in which a close button on the video communication interface of one user is directly clicked and it is shown on the video communication interface of the other user that the counterpart has hung up, the flexibility of ending video communication is increased.

Fig. 3 is a structure view of a video communication ending apparatus according to another embodiment of this invention. Based on the above embodiment, the detection module 21 is further configured to detect whether a second ending button is clicked by the user. The sending module 22 is further configured to send user-request-disconnection information to the counterpart device if the user clicks the second ending button, so that confirm-user-disconnection information is generated by the counterpart device according to a confirmation of the user-request-disconnection information by a user of the counterpart device. The video communication ending apparatus further includes a receiving module 23 configured to receive the confirm-user-disconnection information sent by the counterpart device.

The sending module 22 is configured to send a disconnection request to the counterpart device according to the confirm-user-disconnection information in order to disconnect the video communication with the counterpart device.

The receiving module 23 is further configured to receive a connection setup request sent by the counterpart device and discard the connection setup request. The sending module 22 is further configured to send the network failure prompt information to the counterpart device.

The receiving module 23 is configured to receive a plurality of connection setup requests sent by the counterpart device in a preset period of time and discard each of the plurality of connection setup requests. The sending module 22 is configured to send the network failure prompt information to the counterpart device while the receiving module 23 discards the connection setup request.

The video communication ending apparatus provided in the embodiment of this invention may be configured to execute the method embodiment provided in Fig. 1, and the specific functions thereof are omitted here.

In the embodiment of this invention, a new ending button is added, and network failure prompt information is sent to the counterpart device after a user clicks the new ending button, in order to request the counterpart device's approval to interrupt video communication, thereby improving the flexibility of ending video communication. Moreover, the flexibility of ending video communication is further increased by discarding the connection setup request sent by the counterpart device and sending the network failure prompt information to the counterpart device, so that the user of the counterpart device considers that a network failure makes the video communication with user A unable to be set up again.

To sum up, in the embodiments of the invention, a new ending button is added, and network failure prompt information is sent to the counterpart device after a user clicks the new ending button, so that the user of the counterpart device considers that a network failure causes the interruption of video communication. As compared with the conventional way of ending video communication in which a close button on the video communication interface of one user is directly clicked and it is shown on the video communication interface of the other user that the counterpart has hung up, the flexibility of ending video communication is increased. By adding an additional new ending button and, after a user clicks the additional new ending button, sending user-request-disconnection information to the counterpart device in order to request the counterpart device's approval to interrupt video communication, the flexibility of ending video communication is further increased. Moreover, the flexibility of ending video communication is further improved by discarding the connection setup request sent by the counterpart device and sending the network failure prompt information to the counterpart device, so that the user of the counterpart device considers that a network failure makes the video communication with user A unable to be set up again.

It will be appreciated that the apparatus and methods disclosed in several embodiments of this invention can be implemented in other ways. For example, the apparatus embodiments described above are exemplary. For example, the division into the units is just a kind of logical function division. There are additional division ways in actual implementation. For example, a plurality of units or components may be combined or integrated into another system, or some feature can be omitted or not executed. For another thing, the displayed or discussed coupling or direct coupling or communication connection may be indirect coupling or communication connection through some interfaces, apparatuses or units, and may be electrical, mechanical or in other forms.

The units explained as separate components may or may not be separated physically. The components displayed as units may or may not be physical units, that is, may be located in one place or distributed across a plurality of network units. The object of embodiments of this invention can be achieved by selecting part or all of the units according to actual needs.

In addition, the various functional units of various embodiments can be integrated into one processing unit or can exist as separate units physically, or two or more units may be integrated into one unit. The above integrated units can be realized in hardware or the combination of hardware and software.

The integrated units implemented in the form of software function units may be stored in a computer readable storage medium. The software function units are stored in storage medium, and include several instructions causing a computer device (such as personal computer, server or network device, etc.) or processor to execute parts of steps of the method according to embodiments of the invention. The above storage medium includes medium which can store program code, such as USB flash disk, removable hard disk, Read-Only Memory (ROM), Random Access Memory (RAM), magnetic disk or optical disk, etc.

Those skilled in the art may clearly appreciate that the above division into various functional modules is exemplary for the sake of convenient and concise description. In practical application, the above functions can be accomplished by different functional modules as needed. That is, the internal structure of apparatus can be divided into different functional modules to implement all or part functions described above. For the specific workflow of the apparatus described above, reference can be made to the corresponding process of above method embodiments and the description thereof is omitted here.

It will be appreciated that the above various embodiments are used only for illustrating the technical solution of this invention but not for limiting. Although the invention is explained in detail with reference to the embodiments, the skilled in the art should appreciate that various modifications can be made to the technical solutions recited in the above various embodiments or equivalent replacements can be made to part or all of technical features of the technical solutions.

## Claims

1. A video communication ending method, comprising:
detecting (S101) whether a first ending button or a second ending button is clicked by a user;
sending (S102) network failure prompt information to a counterpart device, if the user clicks the first ending button;
sending (S103) a disconnection request to the counterpart device, in order to disconnect video communication with the counterpart device,
wherein the method is performed by two mobile terminals having video communication interfaces respectively shown on the screens of the two mobile terminals, and on each of the two video communication interfaces, there are a first ending button and a second ending button,
the method further comprising:
sending user-request-disconnection information to the counterpart device if the user clicks the second ending button, so that confirm-user-disconnection information is generated by the counterpart device according to a confirmation of the user-request-disconnection information by a user of the counterpart device;
receiving the confirm-user-disconnection information sent by the counterpart device
wherein after sending the disconnection request to the counterpart device in order to disconnect the video communication with the counterpart device, the method further comprises:
receiving a connection setup request sent by the counterpart device;
discarding the connection setup request and sending the network failure prompt information to the counterpart device.

2. The method according to claim 1, wherein sending the disconnection request to the counterpart device in order to disconnect the video communication with the counterpart device comprises:
sending the disconnection request to the counterpart device according to the confirm-user-disconnection information, in order to disconnect the video communication with the counterpart device.

3. The method according to claim 1, wherein receiving the connection setup request sent by the counterpart device comprises: receiving a plurality of connection setup requests sent by the counterpart device in a preset period of time; and
the discarding the connection setup request and sending the network failure prompt information to the counterpart device comprises: discarding each of the plurality of connection setup requests and meanwhile sending the network failure prompt information to the counterpart device.

4. A video communication ending apparatus, comprising:
a detection module (21) configured to detect whether a first ending button is clicked by a user;
a sending module (22) configured to send network failure prompt information to a counterpart device when the user clicks the first ending button and to send a disconnection request to the counterpart device in order to disconnect the video communication with the counterpart device,
wherein the video communication ending apparatus is a mobile terminal having a video communication interface shown on the screens of the mobile terminal, and on the video communication interface, there are a first ending button and a second ending button, and
the sending module (22) is further configured to send user-request-disconnection information to the counterpart device if the user clicks the second ending button, so that confirm-user-disconnection information is generated by the counterpart device according to a confirmation of the user-request-disconnection information by a user of the counterpart device; and
the video communication ending apparatus further including:
a receiving module (23) configured to receive the confirm-user-disconnection information sent by the counterpart device,
and, after the disconnection request to the counterpart device has been sent in order to disconnect the video communication with the counterpart device, receive a connection setup request sent by the counterpart device and discard the connection setup request; wherein
the sending (22) module is further configured to send the network failure prompt information to the counterpart device.

5. The video communication ending apparatus according to claim 4, wherein the sending module (22) is configured to send the disconnection request to the counterpart device according to the confirm-user-disconnection information in order to disconnect the video communication with the counterpart device.

6. The video communication ending apparatus according to claim 5, wherein the receiving (23) module is configured to receive a plurality of connection setup requests sent by the counterpart device in a preset period of time and discard each of the plurality of connection setup requests; and
the sending module (22) is configured to send the network failure prompt information to the counterpart device while the receiving module discards the connection setup request.

7. A computer program including instructions for executing the steps of a video communication ending method according to any one of claims 1 to 3, when said program is executed by a computer.

8. A recording medium readable by a computer and having recorded thereon a computer program including instructions for executing the steps of a video communication ending method according to any one of claims 1 to 3.

## Patentansprüche

1. Videokommunikationsbeendigungsverfahren, das Folgendes umfasst:
Feststellen (S101), ob durch einen Benutzer auf eine erste Beendigungsschaltfläche oder eine zweite Beendigungsschaltfläche geklickt wird;
Senden (S102) von Netzwerkausfall-Eingabeaufforderungsinformationen an ein Gegengerät, wenn der Benutzer auf die erste Beendigungsschaltfläche klickt;
Senden (S103) einer Trennungsanforderung an das Gegengerät, um Videokommunikation mit dem Gegengerät zu trennen,
wobei das Verfahren durch zwei mobile Endgeräte durchgeführt wird, die Videokommunikationsoberflächen aufweisen, die jeweils auf den Bildschirmen der zwei mobilen Endgeräte gezeigt werden, und auf jeder der zwei Videokommunikationsoberflächen eine erste Beendigungsschaltfläche und eine zweite Beendigungsschaltfläche vorhanden sind,
wobei das Verfahren ferner Folgendes umfasst:
Senden von Benutzeranforderungstrennungsinformationen an das Gegengerät, wenn der Benutzer auf die zweite Beendigungsschaltfläche klickt, derart dass Benutzertrennungsbestätigungsinformationen durch das Gegengerät gemäß einer Bestätigung der Benutzeranforderungstrennungsinformationen durch einen Benutzer des Gegengeräts erzeugt werden;
Empfangen der durch das Gegengerät gesendeten Benutzertrennungsbestätigungsinformationen
wobei nach dem Senden der Trennungsanforderung an das Gegengerät zum Trennen der Videokommunikation mit dem Gegengerät das Verfahren ferner Folgendes umfasst:
Empfangen einer durch das Gegengerät gesendeten Verbindungseinrichtungsanforderung;
Verwerfen der Verbindungseinrichtungsanforderung und Senden der Netzwerkausfall-Eingabeaufforderungsinformationen an das Gegengerät.

2. Verfahren nach Anspruch 1, wobei das Senden der Trennungsanforderung an das Gegengerät zum Trennen der Videokommunikation mit dem Gegengerät Folgendes umfasst:
Senden der Trennungsanforderung an das Gegengerät gemäß den Benutzertrennungsbestätigungsinformationen, um die Videokommunikation mit dem Gegengerät zu trennen.

3. Verfahren nach Anspruch 1, wobei das Empfangen der durch das Gegengerät gesendeten Verbindungseinrichtungsanforderung Folgendes umfasst: Empfangen einer Vielzahl von Verbindungseinrichtungsanforderungen, die durch das Gegengerät in einem voreingestellten Zeitraum gesendet werden; und
das Verwerfen der Verbindungseinrichtungsanforderung und Senden der Netzwerkausfall-Eingabeaufforderungsinformationen an das Gegengerät Folgendes umfasst: Verwerfen jeder der Vielzahl von Verbindungseinrichtungsanforderungen und unterdessen Senden der Netzwerkausfall-Eingabeaufforderungsinformationen an das Gegengerät.

4. Videokommunikationsbeendigungsvorrichtung, die Folgendes umfasst:
ein Feststellungsmodul (21), das dazu ausgestaltet ist, festzustellen, ob durch einen Benutzer auf eine erste Beendigungsschaltfläche geklickt wird;
ein Sendemodul (22), das dazu ausgestaltet ist, Netzwerkausfall-Eingabeaufforderungsinformationen an ein Gegengerät zu senden, wenn der Benutzer auf die erste Beendigungsschaltfläche klickt, und eine Trennungsanforderung an das Gegengerät zu senden, um die Videokommunikation mit dem Gegengerät zu trennen,
wobei die Videokommunikationsbeendigungsvorrichtung ein mobiles Endgerät ist, das eine Videokommunikationsoberfläche aufweist, die auf den Bildschirmen des mobilen Endgeräts gezeigt wird, und auf der Videokommunikationsoberfläche eine erste Beendigungsschaltfläche und eine zweite Beendigungsschaltfläche vorhanden sind, und
das Sendemodul (22) ferner dazu ausgestaltet ist, Benutzeranforderungstrennungsinformationen an das Gegengerät zu senden, wenn der Benutzer auf die zweite Beendigungsschaltfläche klickt, derart dass die Benutzertrennungsbestätigungsinformationen durch das Gegengerät gemäß einer Bestätigung der Benutzeranforderungstrennungsinformationen durch einen Benutzer des Gegengeräts erzeugt werden; und
die Videokommunikationsbeendigungsvorrichtung ferner Folgendes umfasst:
ein Empfangsmodul (23), das dazu ausgestaltet ist, die von dem Gegengerät gesendeten Benutzertrennungsbestätigungsinformationen zu empfangen, und, nachdem die Trennungsanforderung an das Gegengerät gesendet wurde, um die Videokommunikation mit dem Gegengerät zu trennen, eine von dem Gegengerät gesendete Verbindungseinrichtungsanforderung zu empfangen und die Verbindungseinrichtungsanforderung zu verwerfen;
wobei das Sendemodul (22) ferner dazu ausgestaltet ist, die Netzwerkausfall-Eingabeaufforderungsinformationen an das Gegengerät zu senden.

5. Videokommunikationsbeendigungsvorrichtung nach Anspruch 4, wobei das Sendemodul (22) dazu ausgestaltet ist, die Trennungsanforderung an das Gegengerät gemäß den Benutzertrennungsbestätigungsinformationen zu senden, um die Videokommunikation mit dem Gegengerät zu trennen.

6. Videokommunikationsbeendigungsvorrichtung nach Anspruch 5, wobei das Empfangsmodul (23) dazu ausgestaltet ist, eine Vielzahl von Verbindungseinrichtungsanforderungen, die von dem Gegengerät in einem voreingestellten Zeitraum gesendet werden, zu empfangen und jede von der Vielzahl von Verbindungseinrichtungsanforderungen zu verwerfen; und
das Sendemodul (22) dazu ausgestaltet ist, die Netzwerkausfall-Eingabeaufforderungsinformationen an das Gegengerät zu senden, während das Empfangsmodul die Verbindungseinrichtungsanforderung verwirft.

7. Computerprogramm, das Anweisungen zum Ausführen der Schritte eines Videokommunikationsbeendigungsverfahrens nach einem der Ansprüche 1 bis 3 umfasst, wenn das Programm durch einen Computer ausgeführt wird.

8. Aufzeichnungsmedium, das durch einen Computer lesbar ist und darauf aufgezeichnet ein Computerprogramm aufweist, das Anweisungen zum Ausführen der Schritte eines Videokommunikationsbeendigungsverfahrens nach einem der Ansprüche 1 bis 3 umfasst.

## Revendications

1. Procédé de fin de communication vidéo, comprenant :
la détection (S101) du clic ou non d'un utilisateur sur un premier bouton de fin ou un deuxième bouton de fin ;
l'envoi (S102) d'informations d'invite de défaillance de réseau à un dispositif homologue, si l'utilisateur clique sur le premier bouton de fin ;
l'envoi (S103) d'une demande de déconnexion au dispositif homologue, afin de déconnecter une communication vidéo avec le dispositif homologue,
dans lequel le procédé est réalisé par deux terminaux mobiles ayant des interfaces de communication vidéo affichées respectivement sur les écrans des deux terminaux mobiles, et sur chacune des deux interfaces de communication vidéo, il y a un premier bouton de fin et un deuxième bouton de fin,
le procédé comprenant en outre :
l'envoi d'informations de demande de déconnexion par l'utilisateur au dispositif homologue si l'utilisateur clique sur le deuxième bouton de fin, de sorte que des informations de confirmation de déconnexion par l'utilisateur soient générées par le dispositif homologue selon une confirmation des informations de demande de déconnexion par l'utilisateur par un utilisateur du dispositif homologue ;
la réception des informations de confirmation de déconnexion par l'utilisateur envoyées par le dispositif homologue
dans lequel, après l'envoi de la demande de déconnexion au dispositif homologue afin de déconnecter la communication vidéo avec le dispositif homologue, le procédé comprend en outre :
la réception d'une demande d'établissement de connexion envoyée par le dispositif homologue ;
le rejet de la demande d'établissement de connexion et l'envoi des informations d'invite de défaillance de réseau au dispositif homologue.

2. Procédé selon la revendication 1, dans lequel l'envoi de la demande de déconnexion au dispositif homologue afin de déconnecter la communication vidéo avec le dispositif homologue comprend :
l'envoi de la demande de déconnexion au dispositif homologue selon les informations de confirmation de déconnexion par l'utilisateur, afin de déconnecter la communication vidéo avec le dispositif homologue.

3. Procédé selon la revendication 1, dans lequel la réception de la demande d'établissement de connexion envoyée par le dispositif homologue comprend : la réception d'une pluralité de demandes d'établissement de connexion envoyées par le dispositif homologue dans une période de temps prédéfinie ; et
le rejet de la demande d'établissement de connexion et l'envoi des informations d'invite de défaillance de réseau au dispositif homologue comprend : le rejet de chacune de la pluralité de demandes d'établissement de connexion et l'envoi simultané des informations d'invite de défaillance de réseau au dispositif homologue.

4. Appareil de fin de communication vidéo, comprenant :
un module de détection (21) configuré pour détecter si un utilisateur a cliqué sur un premier bouton de fin ;
un module d'envoi (22) configuré pour envoyer des informations d'invite de défaillance de réseau à un dispositif homologue lorsque l'utilisateur clique sur le premier bouton de fin, et pour envoyer une demande de déconnexion au dispositif homologue afin de déconnecter la communication vidéo avec le dispositif homologue,
dans lequel l'appareil de fin de communication vidéo est un terminal mobile ayant une interface de communication vidéo affichée sur les écrans du terminal mobile, et sur l'interface de communication vidéo, il y a un premier bouton de fin et un deuxième bouton de fin, et
le module d'envoi (22) est en outre configuré pour envoyer des informations de demande de déconnexion par l'utilisateur au dispositif homologue si l'utilisateur clique sur le deuxième bouton de fin, de sorte que des informations de confirmation de déconnexion par l'utilisateur soient générées par le dispositif homologue selon une confirmation des informations de demande de déconnexion par l'utilisateur par un utilisateur du dispositif homologue ; et
l'appareil de fin de communication vidéo comportant en outre :
un module de réception (23) configuré pour recevoir les informations de confirmation de déconnexion par l'utilisateur envoyées par le dispositif homologue, et après que la demande de déconnexion au dispositif homologue a été envoyée afin de déconnecter la communication vidéo avec le dispositif homologue, recevoir une demande d'établissement de connexion envoyée par le dispositif homologue et rejeter la demande d'établissement de connexion ; dans lequel
le module d'envoi (22) est en outre configuré pour envoyer les informations d'invite de défaillance de réseau au dispositif homologue.

5. Appareil de fin de communication vidéo selon la revendication 4, dans lequel le module d'envoi (22) est configuré pour envoyer la demande de déconnexion au dispositif homologue selon les informations de confirmation de déconnexion par l'utilisateur afin de déconnecter la communication vidéo avec le dispositif homologue.

6. Appareil de fin de communication vidéo selon la revendication 5, dans lequel le module de réception (23) est configuré pour recevoir une pluralité de demandes d'établissement de connexion envoyées par le dispositif homologue dans une période de temps prédéfinie et rejeter chacune de la pluralité de demandes d'établissement de connexion ; et
le module d'envoi (22) est configuré pour envoyer les informations d'invite de défaillance de réseau au dispositif homologue tandis que le module de réception rejette la demande d'établissement de connexion.

7. Programme informatique comportant des instructions pour exécuter les étapes d'un procédé de fin de communication vidéo selon l'une quelconque des revendications 1 à 3, lorsque ledit programme est exécuté par un ordinateur.

8. Support d'enregistrement lisible par un ordinateur et sur lequel est enregistré un programme informatique comportant des instructions pour exécuter les étapes d'un procédé de fin de communication vidéo selon l'une quelconque des revendications 1 à 3.
